Europäisches Patentamt

European Patent Office

Office européen des brevets

(19)

(11) Veröffentlichungsnummer: **0 010 579**
**B1**

(12) **EUROPÄISCHE PATENTSCHRIFT**

(45) Veröffentlichungstag der Patentschrift: **02.03.83**

(21) Anmeldenummer: **79102879.8**

(22) Anmeldetag: **09.08.79**

(51) Int. Cl.³: **B 29 F 3/10,** B 29 D 23/05, F 16 L 11/08

(54) Verfahren zur Herstellung von Hochdruckschläuchen und Vorrichtung zur Durchführung des Verfahrens.

(30) Priorität: **12.08.78 DE 2835401**

(43) Veröffentlichungstag der Anmeldung:
**14.05.80 Patentblatt 80/10**

(45) Bekanntmachung des Hinweises auf die Patenterteilung:
**02.03.83 Patentblatt 83/9**

(84) Benannte Vertragsstaaten:
**AT BE CH FR GB IT LU NL SE**

(56) Entgegenhaltungen:
**DE - A - 1 504 098**
**DE - A - 2 311 305**
**DE - A - 2 342 133**
**DE - A - 2 550 664**
**DE - B - 1 554 776**
**DE - C - 2 026 814**
**DE - U - 7 805 820**
**US - A - 2 215 996**
**US - A - 3 298 063**
**US - A - 3 689 610**

(73) Patentinhaber: **Polyflex Schwarz GmbH & Co.**
**An der Tuchbleiche 23-25**
**D-6840 Hüttenfeld (DE)**

(72) Erfinder: **Schwarz, Hans Günter**
**Weimarerstrasse 8**
**D-6940 Weinheim-Waid (DE)**

(74) Vertreter: **Ratzel, Gerhard, Dr.**
**Seckenheimer Strasse 36a**
**D-6800 Mannheim 1 (DE)**

Courier Press, Leamington Spa, England.

Verfahren zur Herstellung von Hochdruckschläuchen und Vorrichtung zur Durchführung des Verfahrens

Die Erfindung betrifft ein Verfahren zur Herstellung von Hochdruckschläuchen mit einer Innenseele und einer an dieser gut haftenden Oberdecke, jeweils aus thermoplatischem Kunststoff, insbesondere aus Polyurethan oder thermoplastischem Polyester und einem aus Metalldrähten aufgebauten, zwischen Innenseele und Oberdecke angeordneten Druckträger, bei dem ausgehend von oder bereits mit dem Druckträger armierten Innenseele die Oberdecke mittels eines Spritzkopfes auf den etwa auf die Arbeitstemperatur des Spritzkopfes erhitzten Druckträger aufextrudiert wird, Außerdem betrifft die Erfindung eine Vorrichtung zur Durchführung des Verfahrens mit einem Spritzkopf für die Oberdecke, einer Erhitzungseinrichtung für den Druckträger, einer Abwickelstation für die mit dem Druckträger armierte Innenseele und einer Abzugseinrichtung für den fertigen Druckschlauch und einer sich an die Erhitzungseinrichtung anschließenden Vakuumstation.

Aus der DE—C—2 026 814 ist ein Verfahren dieser Gattung bekannt. Dort geht es darum, einen Haftverbund zwischen einem Polyurethanüberzug und einem metallischen Träger zu schaffen, der auch bei hoher mechanischer und/oder chemischer Beanspruchung, beispielsweise einer solchen durch überhitzten Wasserdampf, keine Zerfall- oder Ermüdungserscheinungen zeigt. so ist unter dem dortigen Beispiel 4 beschrieben, wie dieses Verfahren bei einem Kunststoffschlauch, bei dem drucktragende schraubenlinienförmige Stahldrähte, die unmittelbar aneinanderliegen, als Druckträger dienen, erfolgreich eingesetzt werden kann. Es hat sich gezeigt, daß dieses vorbekannte Verfahren bei Hochdruckschläuchen nicht zur einer dauerhaften Ummantelung führt.

Aus der DE—A—1 504 098 ist ein Verfahren bekannt, das sich auf Niederdruckschläuche bezieht, bei denen also der Druckträger eine relativ große Maschenweite aufweist, bei dem aber die Haftung der Oberdecke nicht so sehr an den Druckträger als vielmehr auf der Innenseele erzielt werden soll. Dazu wird der Innenschlauch dort mit einem Druckmittel beaufschlagt und äußerlich soweit erwärmt, daß er unter der Wirkung des Innendrucks durch die Lücken bzw. Maschen des Druckträgers nach außen treten kann, worauf dann der äußere Hüllschlauch aufgebracht wird. An den Durchtrittsstellen des Innenschlauches durch den Druckträger soll dann ein Haftverbund mit dem Hüllschlauch erreicht werden. Ein ähnliches Verfahren ist aus der DE—A—2 342 133 bekannt. Dort wird dann auf Blatt 9 der Beschreibung angegeben, daß beispielsweise ein Innendruck von 140 kp/cm² erforderlich ist. Außerdem wird der Innenschlauch dabei in einen Ofen von einer Temperatur von 400°C eingeführt. Infolge dieser extremen Erhitzung ist unmittelbar anschließend eine Flüssigkeitskühlung vorgeschlagen. Insbesondere das letztere Beispiel zeigt, welchen Belastungen der Innenschlauch ausgesetzt ist und welcher vorrichtungsmäßiger Aufwand dazu getrieben werden muß. Selbst diese nachteiligen Anstrengungen erlauben noch nicht die Anwendung dieses Verfahrens auf Hochdruckschläuche; denn der Druckträger ist dort zu engmaschig, als daß auch mit solch großen Temperatur- und Druckbelastungen die Innenseele zum Durchtritt durch die Maschen des Druckträgers gebracht werden könnte.

In der DE—A1—2 550 664 wird ein Verfahren beschrieben, das sich auf einen druckmittelführenden Schlauch, insbesondere Hydraulikschlauch, bezieht, also der Klasse der Hochdruckschläuche, die durch diese Erfindung hier angesprochen sind, nahekommt. Dort word schon z.B. auf Blatt 2 im zweiten Absatz erwähnt, daß das Extrudieren der Ummantelung nur einen für die Handhabung unzureichenden Zusammenhalt mit dem Innenschlauch ergibt. Zur Lösung dieses Problems werden dort spezielle Kunststoff vorgeschlagen, die schließlich durch ionisierende Strahlen verletzt werden sollen; dadurch soll ein dauerhafter Haftverbund zwischen Innenschlauch und Schlauchoberdecke erzielt werden. Der Nachteil dieser Problemlösung liegt zum einen darin, daß nur spezielle, dort im einzelnen genannte Kunststoffe hierzu geeignet sind und desweiteren, daß, wie zum Beispiel dort auf Blatt 9 angegeben, sehr große, schwierig zu erzeugende und gefährliche Strahlendosen notwendig sind. Dadurch wird dieses Verfahren kostspielig und gefährlich; außerdem leiden die mechanischelastischen Eigenschaften der Kunststoffe insgesamt unter einer solchen Strahlenbelastung.

Somit bleibt die Aufgabe zu lösen, ein Verfahren der eingangs genannten Gattung zu schaffen, vermöge dessen bei Hochdruckschläuchen ein dauerhafter Haftverbund der Oberdecke mit dem Schlauchinneren erzielt wird. Wünschenswert ist dabei eine hohe Knick- und Impulsfestigkeit des Hochdruckschlauches. Diese mechanisch-elastischen Eigenschaften setzen einen innigen Verbund von Innenseele und Oberdecke voraus. Daher stellt sich insbesondere die Aufgabe, ein Verfahren der eingangs genannten Gattung derart zu schaffen, daß trotz der notwendigen Maschenenge des Druckträgers eines Hochdruckschlauches ein inniger dauerhafter Verbund zwischen Innenseele und Oberdecke erreicht wird.

Diese Aufgabe wird erfindungsgemäß dadurch gelöst, daß ein Druckträger aus gefachten und geflochtenen Drahtlagen verwendet wird, daß der auf der Innenseele befindliche Druckträger durch Aufbringen einer Zugkraft in Schlauchlängsrichtung vorgespannt wird und danach die Aufheizung ungefähr auf die Temperatur des Extrudats bzw. des Spritzkopfes erfolgt, wodurch das Material der Innenseele teilweise durch die Durchbrechungen des Druckträgers gedrückt wird, und daß danach gleichzeitig mit dem Aufextrudieren der Oberdecke um den Druckträger herum ein Vakuum angelegt wird.

In einer bevorzugten Ausführungsform des Verfahrens wird vor dem Aufheizen des Druckträgers auf diesen eine Haftsubstanz insbesondere ein Polyurethankleber, aufgebracht.

In einer weiteren vorteilhaften Ausgestaltung des Verfahrens wird der Druckträger vor dem Aufheizen mit einem Lösungsmittel behandelt.

Insbesondere kann das Aufheizen des Druckträgers durch Flammringe erfolgen.

In der DE—C—2 026 814, DE—A—1 504 098 und DE—A—2 342 133 sind für die Durchführung der dort beschriebenen Verfahren jeweils auch geeignete Vorrichtung beschrieben. Die Vorrichtungen weisen einen Spritzkopf für die Oberdecke, eine Erhitzungseinrichtung für den Druckträger und eine Abzugseinrichtung für den fertigen Druckschlauch auf. Daß die mit dem Druckträger armierte Innenseele dieser Vorrichtung von einer Abwickelstation geliefert wird, ist ebenfalls üblich. Die DE—A—1 504 098 offenbart auch die Möglichkeit, den Ringraum des Spritzkopfes an eine Unterdruckquelle auzuschließen.

Es ist die Aufgabe zu lösen, eine Vorrichtung dieser Gattung derart fortzubilden, daß sie zur Durchführung des erfindungsgemäßen Verfahrens, insbesondere auch in seinen besonderen Ausführungsformen, geeignet ist.

Der erfindungsgemäße Lösungsvorschlag dieser Aufgabe besteht nun in einer Vorrichtung der vorstehend genannten Gattung, die zusätlich eine sich an die Abwickelstation anschließende Brems- und Synchronisiereinrichtung aufweist. Die Brems- und Synchronisiereinrichtung sorgt für die erfindungsgemäß notwendige Vorspannung des Druckträgers aus der Innenseele.

Als besonders wirkungsvoll hat sich als Erhitzungseinrichtung eine Flammstation erwiesen, die aus einem oder mehreren Flammringen besteht. Dies ist überraschend, da eine Flammenbehandlung in der Kunststofftechnik nicht üblich ist. Es hat sich jedoch gezwigt, daß das erfindungsgemäße Verfahren damit besonders gut durchführen läßt.

Insgesamt kann festgehalten werden, daß es nunmehr möglich ist, einen Druckschlauch aus verschiedenen Kunststoffmaterialien der Innenseele und der Oberdecke herzustellen, die durch den metallischen Druckträger hindurch einen innigen Verbund bilden, der die Eigenschaften eines derartigen Druckschlauches hinsichlich der Knickfestigkeit, der Flexibilität und der Druckfestigkeit sprunghaft erhöht. Insbesondere kann auch die Druckfestigkeit erhöht werden, da als metallischer Druckträger ein Träger mit engen Durchbrechungen verwendet werden kann, so zum Beispiel ein Träger aus enggeflochtenen oder gewebten Drahtlagen.

In vorteilhafter Weise wird durch das Anlegen des Vakuums die Restfeuchtigkeit von noch eventuell verbliebenen Lösungsmittelresten und die in den Wickellagen des Trägers befindliche Luft vor dem Durchlauf durch den Spritzkopf des Extruders abgesogen.

In vorteilhafter Weise werden zur Erreichung einer besseren Haftung zwischen der Innenseele, dem Druckträger und der Oberdecke die Stahldrahtlagen unmittelbar vor dem Spritzkopf in Fertigungsrichtung gesehen durch einen oder mehrerer Flammringe aufgeheizt bzw. abgeflammt. Die Temperatur entspricht dabei etwa der Temperatur des Spritzkopfes. In vorteilhafter Weise wird durch dieses Ablammen erreicht, daß die auf den Metalldrähten befindlichen Ziehfette, die für die gewünschte feste Verbindung zwischen der Oberdecke und der Innenseele störend wirken, abgebrannt werden. Dabei entspannt sich die unter radialer Vorspannung nach außen stehende Innenseele während des Flammprozesses in Richtung des Druckträgers, wobei die Innenseele bzw. die Oberfläche der Innenseele zumindest teilweise erweicht und durch die Lücken oder Durchbrechungen des metallischen Trägers dringt. Auf diese Weise verschmilzt das Material der Innenseele mit dem gleichzeitig aufextrudierten Material der Oberdecke zu einem innigen Verbund, d.h. es wird eine Schmelzverbindung geschaffen.

Die Erfindung ist mit weiteren Vorteilen anhand mehrerer in der Zeichnung dargestellter Beispiele anschließend beschrieben. Dabei zeigen:

Figur 1 einen Querschnitt durch einen verbindungsgemäßen Druckschlauch,

Figur 2 einen Querschnitt durch einen weiteren erfindungsgemäßen Druckschlauch,

Figur 3 eine Draufsicht auf einen Teil eines metallischen Trägers bei entfernter Oberdecke und

Figur 4 eine perspektivische Darstellung einer Vorrichtung zur Durchführung des erfindungsgemäßen Verfahrens.

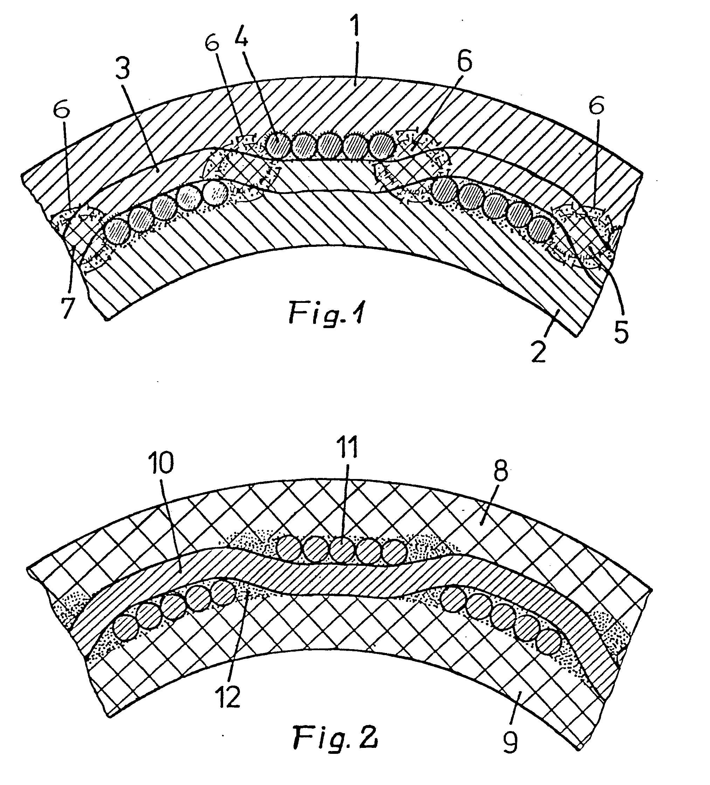

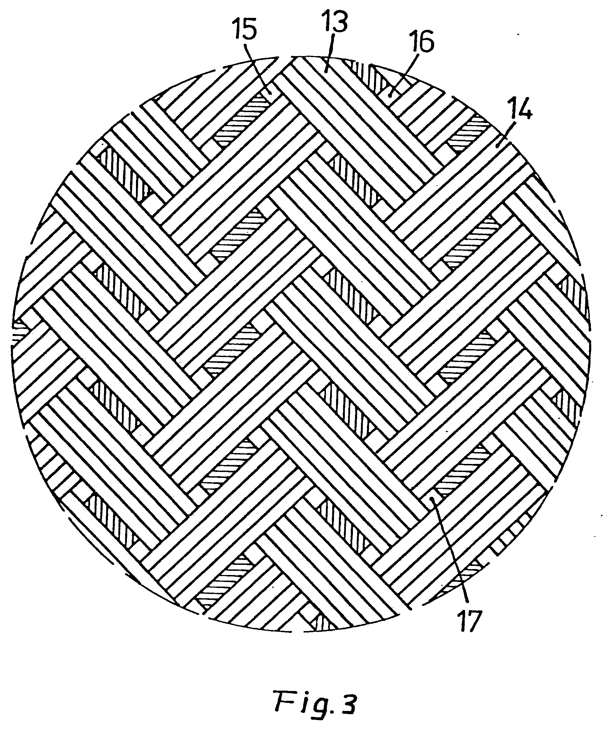

In den Figuren 1 und 2 sind im Querschnitt zwei gemäß den erfindungsgemäßen Verfahren hergestellte Druckschläuche gezeigt.

Der Druckschlauch gemäß der Figur 1 besteht aus einer Oberdecke 1, welche vorzugsweise aus Polyurethan oder thermoplastischen Polyestern besteht. Als Druckträger des Druckschlauches dient ein metallischer Träger, der hier aus einzelnen Drähten besteht, die in Drahtlagen 3, 4 angeordnet sind. Es ist die abwechselnde Lage der Drahtlagen bzw. Drahtbänder dargestellt. Die Innenseele 2 des Druckschlauches besteht ebenfalls aus einem thermoplastischen Polymer.

Die einzelnen Drahtlagen 13, 14 eines metallischen Trägers sind zum Beispiel in Figur 3 dargestellt. Dieser metallische Träger besteht aus miteinander verflochtenen bzw. verwobenen Drahtlagen 13, 14, welche derart miteinander verbunden sind, daß kleine, regelmäßige rhombenförmige Durchbrechungen 15, 16, 17 innerhalb der Gesamtoberfläche des Trägers gebildet werden. Diese Durchbrechungen 15, 16, 17 sind wesentlich für die Durchführung des erfindungsgemäßen Verfahrens. Denn bei der Erweichung der Innenseele 2 tritt das Material derselben in den Bereichen 5, 6, 7 derartiger Durchbrechungen (Figur 1) durch den metallischen Träger hindurch und bildet mit dem gleichzeitig von außen aufgebrachten Material der Oberdecke einen innigen Verbund, was in Figur 1 durch die doppelt Schraffur der Bereiche 5, 6 und 7 gekennzeichnet ist.

Figur 2 zeigt ebenfalls einen Querschnitt durch einen Druckschlauch, hergestellt nach dem erfindungsgemäßen Verfahren. Der Druckschlauch besteht aus einer Oberdecke 8 und einer Innenseele 9, zwischen denen wiederum ein Träger, vorzugsweise ein metallischer Träger, bestehend aus Drahtlagen 10, 11 angeordnet ist. Durch die Bezugsziffer 10 ist wiederum die Drahtklöppellage gekennzeichnet. Auch hier bilden die einzelnen Drähte des metallischen Trägers Durchbrechungen, die zum Beispiel musterartig auf denselben verteilt sein können. In diesen Bereichen, die in Figur 2 mit der Bezugsziffer 12 gekennzeichnet sind, tritt bei Erweichen und unter Vorspannung das Material der Innenseele 9 durch die Durchbrechungen des Trägers 10, 11 hindurch und verbindet sich auf der äußeren Oberfläche des Trägers mit dem Material der Oberdecke 8 zu einem innigen Verbund, was in der Figur 2 durch die gepunkteten Bereiche angedeutet ist.

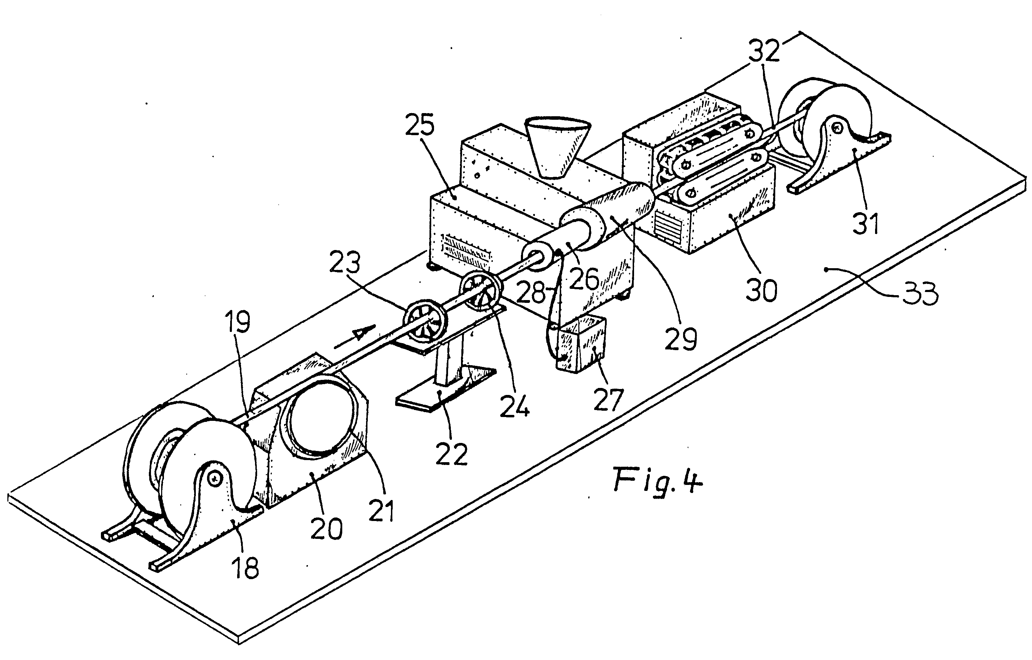

Figur 4 zeigt eine Vorrichtung zur Durchführung des erfindungsgemäßen Verfahrens. Auf einer Trommel 18 ist der metallische Träger 19 aufgewickelt, der schon auf eine Innenseele aufgezogen ist. Von dieser Abzugstrommel 18 wird der Träger 19 mittels einer Brems- und Synchronisierungseinrichtung 20 abgezogen, die zum Beispiel eine Bremsscheibe besitzt, um die der Träger 19 unter Bildung einer Schlaufe 21 herumgeschlungen ist. Mittels dieser Bremseinrichtung kann die Abzugsspannung bzw. die Abzugsgeschwindigkeit des Trägers 19 entsprechend reguliert werden, insbesondere wird aufgrund der Bremsung dem Träger 19 eine Vorspannung erteilt. An diese Brems- und Synchronizierungseinrichtung 20 schließt sich eine Flammstation 22 an, die bevorzugtermaßen aus 2 Flammringen 23, 24 besteht, durch die der Träger 19 mitsamt der Innenseele zentral hindurchläuft. An die Flammstation 22 schließt sich eine Vakuumstation 26 an, welche vorzugsweise aus einem Vakuumrohr gebildet wird, an welches über eine Schlauchleitung 28 eine Vakuumpumpe 27 angeschlossen ist. Nach der Vakuumstation 26 folgt die Extrudierstation 25 mit Spritzkopf 29 zum Aufbringen der Oberdecke auf den Träger 19. An die Extrudierstation 25 schließt sich eine Abzugsstation 30, an welch den Transport des fertigen Druckschlauches bewerkstelligt, indem sie den Träger durch die verschiedenen Stationen zieht. Nach der Abzugsstation 30 befindet sich eine Aufwickeleinrichtung 31 zum Aufwickeln des fertigen Druckschlauches 32.

Bevorzugterweise können sämtliche genannten Aggregate in linearer Anordnung, wie in Figur 4 gezeigt, in Zugrichtung des Trägers 19 auf einer gemeinsamen Grundplatte angeordnet sein, die das Bezugszeichen 33 trägt.

Nach weiteren Ausführungsformen kann die Erhitzungseinrichtung auch aus einer Induktionsheizung, einer Infrarotheizung oder einer Heißluftheizung bestehen.

**Patentansprüche**

1. Verfahren zur Herstellung von Hochdruckschläuchen mit einer Innenseele (2; 9) und einer an dieser gut haftenden Oberdecke (1; 8), jeweils aus thermoplastischem Kunststoff, insbesondere aus Polyurethan oder thermoplastischem Polyester, und einem aus Metalldrähten aufgebauten, zwischen Innenseele und Oberdecke (1; 8) angeordneten Druckträger (3, 4; 13, 14; 10, 11; 19) bei dem ausgehend von der bereits mit dem Druckträger (3, 4; 13, 14; 10, 11; 19) armierten Innenseele (2; 9) die Oberdecke (1; 8) mittels eines Spritzkopfes (29) auf den etwa auf die Arbeitstemperatur des Spritzkopfes (29) erhitzten Druckträger (3, 4; 13, 14; 10, 11; 19) aufextrudiert wird, dadurch gekennzeichnet, daß ein Druckträger (3, 4; 13, 14; 10, 11; 19) aus gefachten und geflochtenen Drahtlagen (3, 4; 13, 14; 10, 11; 19) verwendet wird, daß der auf der Innenseele (2; 9) befindliche Druckträger (3, 4; 13, 14; 10, 11; 19) durch Aufbringen einer Zugkraft in Schlauchlängsrichtung vorgespannt wird und danach die Aufheizung ungefahr auf die Temperatur des Extrudats bzw. des Spritzkopfes (29) erfolgt, wodurch das Material der Innenseele (2; 9) teilweise durch die Durchbrechungen (15, 16, 17) des Druckträgers (3, 4; 13, 14; 10, 11; 19) gedrückt wird, und daß danach gleichzeitig mit dem Aufextrudieren der Oberdecke (1; 8) um den Druckträger (3, 4; 13, 14; 10, 11; 19) herum ein Vakuum angelegt wird.

2. Verfahren nach Anspruch 1, dadurch gekennzeichnet, daß vor dem Aufheizen des Druckträgers (3, 4; 13, 14; 10, 11; 19) auf diesen eine Haftsubstanz, insbesondere ein Polyurethankleber, aufgebracht wird.

3. Verfahren nach Anspruch 1 oder 2, dadurch gekennzeichnet, daß vor dem Aufheizen des Druckträgers (3, 4; 13, 14; 10, 11; 19) dieser mit einem Lösungsmittel behandelt wird.

4. Verfahren nach mindestens einem der vorherigen Ansprüche, dadurch gekennzeichnet, daß das Aufheizen des Druckträgers (3, 4; 13, 14; 10, 11; 19) durch Flammringe (23, 24) erfolgt.

5. Vorrichtung zur Durchführung des Verfahrens nach einem der Ansprüche 1 bis 4, mit einem Spritzkopf (29) für die Oberdecke (1; 8), einer Erhitzungseinrichtung (22) für den Druckträger (3, 4; 13, 14; 10, 11; 19), einer Abwickelstation (18) für die mit dem Druckträger (3, 4; 13, 14; 10, 11; 19) armierte Innenseele (2; 9), einer Abzugseinrichtung (30) für den fertigen Druckschlauch (32) und einer sich an die Erhitzungseinrichtung (22) anschließenden Vakuumstation (26) gekennzeichnet durch eine sich an die Abwickelstation (18) anschließende Brems- und Synchronisierichtung (20).

6. Vorrichtung nach Anspruch 5, dadurch gekennzeichnet, daß die Erhitzungseinrichtung (22) aus einer Flammstation mit einem oder mehreren Flammringen (23, 24) besteht.

**Revendications**

1. Procédé de fabrication de tuyaux souples pour hautes pressions, comportant une âme intérieure (2, 9) et une enveloppe extérieure qui adhère bien à cette âme (1, 8), l'une et l'autre en matière plastique thermoplastique, en particulier en polyuréthane ou en polyester thermoplastique, et un élément porteur de pression réalisé en fils métalliques, (3, 4, 13, 14, 10, 11, 19) placé entre l'âme intérieure et l'enveloppe extérieure (1, 8) dans lequel procédé l'enveloppe extérieure (1, 8) est extrudée au moyen d'une tête d'extrusion (29) sur l'élément porteur de pression (3, 13, 14, 10, 11, 19) chauffé sensiblement à la température de travail de la tête d'extrusion (29) à partir de l'âme intérieure (2, 9) déjà armée par l'élément porteur de pression (3, 4, 13, 14; 10, 11; 19), lequel procédé est caractérisé en ce qu'un élément porteur de pression (3, 4, 1, 14, 10, 11, 19) constitué par des couches de fils assemblées et tressées (3, 4; 13, 14, 10, 11; 19) est utilisé, en ce que l'élément porteur de pression (3, 4, 13, 14; 10, 11; 19) qui est placé sur l'âme intérieure (2, 9) est précontraint dans le sens longitudinal du tuyau souple par application d'une force de traction, après quoi a lieu le chauffage approximativement à la température de l'extrudat ou de la tête d'extrusion (29), ce qui fait que le matériau de l'âme intérieure (2; 9) est forcé de manière à traverser en partie les découpures (15, 16, 17) pratiquées dans l'élément porteur de pression (3, 4, 13, 14; 10, 11; 19) et en ce qu'un vide est ensuite créé en même temps qu'est réalisée l'extrusion de l'enveloppe extérieure (1; 8) autour de l'élément porteur de pression (3, 4, 13, 14; 10, 11; 19).

2 Procédé selon la revendication 1, caractérisé en ce qu'une substance adhésive, en particulier une colle de polyuréthane, est appliqué sur l'élément porteur de pression (3, 4; 13, 14; 10, 11; 19) avant de chauffer ce dernier.

3. Procédé selon la revendication 1 ou 2, caractérisé en ce que l'élément porteur de pression (3, 4; 13, 14; 10, 11; 19) est traité par un solvant, ayant d'être chauffé.

4. Procédé selon au moins l'une des revendications précédentes, caractérisé en ce que le chauffage de l'élément porteur de pression (3, 4, 13, 14; 10, 11; 19) est réalisé à l'aide de bagues à flammes (23, 24).

5. Dispositif pour la mise en oeuvre du procédé selon l'une quelconque des revendications 1 à 4, comprenant une tête d'extrusion (29) pour l'enveloppe extérieure (1; 8), un dispositif de chauffage (22) pour l'élément porteur de pression (3, 4; 11, 14; 10, 11; 19), un poste de déroulement (18) pour l'âme intérieure armée de l'élément porteur de pression (3, 4, 11, 14; 10, 11; 19) et un dispositif d'évacuation (30) par traction du tuyau souple fini (32), lequel dispositif est caractérisé en ce qu'il comporte en outre, un dispositif de freinage et de synchronisation raccordé au poste de déroulement (20) et un poste de vide (26) raccordé au dispositif de chauffage (22).

6. Dispositif selon la revendication 5, caractérisé en ce que le dispositif de chauffage (22) est constitué par un foyer comportant une ou plusieurs bagues à flammes (23, 24).

**Claims**

1. A method of producing high-pressure flexible tubes consisting of an internal core (2; 9) and an external cover (1; 8) securely adhering to said core; both parts consisting of thermoplastic synthetic material, in particular polyurethane or thermoplastic polyester; with a pressure-bearing layer constructed of metal wiring (3, 4; 13, 14; 10, 11; 19) situated between the internal core and the external cover; in which method the cover (1; 8) is extruded by means of an extruder (29) onto the pressure-bearing layer (3, 4; 13, 14; 10, 11; 19) which latter is heated to about the operating temperature of said extruder (29); characterized by the following features: a pressure-bearing layer (3, 4; 13, 14; 10, 11; 19) consisting of netted and meshed wire layers (3, 4; 13, 14; 10, 11; 19) is provided, which pressure-bearing layer (3, 4; 13, 14; 10, 11; 19) applied over the internal core (2; 9) is pre-stressed by application of a tension force in the longitudinal direction of the tube, followed by heating to the temperature of the extrudate or the extruder (29) respectively whereby the material of the internal core (2; 9) is partly forced through the openings (15, 16, 17) in the pressure-bearing layer (3, 4; 13, 14; 10, 11; 19); and after this a vacuum is created around the pressure-bearing layer (3, 4; 13, 14; 10, 11; 19) simultaneously with the extruding by the extruder of the cover (1; 8).

2. A method according to Claim No. 1, characterized by the following features; an adhesive layer is applied onto the pressure-bearing layer (3, 4; 13, 14; 10, 11; 19) preferably a polyurethane adhesive, prior to heating of said pressure-bearing layer.

3. A method according to claim No. 1 or No.

2, characterized by the following features: The pressure-bearing layer (3, 4; 13, 14; 10, 11; 19) is prepared by application of a solvent prior to heating said pressure-bearing layer.

4. A method according to any one of the preceding Claims, characterized by the following features: Heating of the pressure-bearing layer (3, 4; 13, 14; 10, 11; 19) is effected by rings of flame (23, 24).

5. An apparatus for the procedure pursuant to any one of the above Claims No. 1 through 4, provided with an extruder (29) for the external cover (1; 8); with a heating unit (22) for the pressure-bearing layer (3, 4; 13, 14; 10, 11; 19) with an unwinding station (18) for the internal core (2; 9) united to the pressure-bearing layer (3, 4; 13, 14; 10, 11; 19), and with an extracting unit (30) for the finished high-pressure flexible tube (33); characterized by the following features: a braking and synchronization device (20) is provided following the unwinding station (18), and a vacuum station is provided connected to the heating unit (22).

6. An apparatus according to Claim No. 5, characterized by the following features: the heating unit (22) consists of a flame station with one or several rings of flame (23, 24).

0010 579

Fig. 1

Fig. 2

1

Fig. 3

Fig. 4